# EUROPEAN PATENT SPECIFICATION

(11) **EP 4 325 461 B1**
(45) Date of publication and mention of the grant of the patent: **27.11.2024**
(21) Application number: 22190934.4
(22) Date of filing: 18.08.2022
(51) Int. Cl.: G08G 1/0967, G08G 1/16

(54) **METHOD FOR CONTROLLING A FIRST VEHICLE, METHOD FOR ASSISTING A FIRST VEHICLE IN TRAVELLING ALONG A PLANNED TRAJECTORY, METHOD FOR PROVIDING AN INFORMATION DESCRIBING AN AMOUNT OF VEHICLES BEING POSITIONED ON A PLANNED TRAJECTORY, DATA PROCESSING APPARATUSES, COMPUTER PROGRAMS, VEHICLE AND TRAFFIC CONTROL SYSTEM**
VERFAHREN ZUM STEUERN EINES ERSTEN FAHRZEUGS, VERFAHREN ZUM STEUERN UND STEUERN
PROCÉDÉ ET APPAREIL DE TRAITEMENT DE DONNÉES, PROGRAMMES INFORMATIQUES, VÉHICULE ET SYSTÈME DE COMMANDE DE TRAFIC

(43) Date of publication of application: 21.02.2024
(73) Proprietor: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(56) References cited:
- EP-A1- 3 916 696
- JP-A- 2020 004 235
- US-A1- 2015 248 131
- US-A1- 2021 016 779
- US-A1- 2021 241 624
- US-A1- 2021 319 691
- US-A1- 2021 325 880
- US-A1- 2022 105 926
- US-B1- 11 242 051
- US-B2- 11 016 485

## Description

The present disclosure relates to a method for controlling a first vehicle, wherein the first vehicle has a known identification feature, wherein the identification feature is an alphanumeric code of a license, is located at a known position in a known lane and is travelling along a planned trajectory. A stopped second vehicle being located downstream of the first vehicle on the planned trajectory is detected.

The present disclosure is additionally directed to a method for assisting a first vehicle in travelling along a planned trajectory, wherein a stopped second vehicle is located downstream of the first vehicle on the planned trajectory.

Moreover, the present disclosure relates to a method for providing an information describing an amount of vehicles being positioned on a planned trajectory of a first vehicle at a position downstream of a stopped second vehicle.

Also, the present disclosure is directed to a primary data processing apparatus, a secondary data processing apparatus, a tertiary data processing apparatus and computer programs.

Additionally, the present disclosure relates to a vehicle and a traffic control system.

It is noted that the terms first vehicle and second vehicle are only used in order to distinguish different vehicles. A specific number of vehicles is not implied.

If a vehicle, which is designated as the first vehicle here, travels along a planned trajectory, it may happen that a second stopped vehicle is located on the trajectory and the first vehicle travels towards it.

If the first vehicle is operated by a human driver, the human driver needs to decide how to react to such a situation. Obviously, the human driver also needs to take into account other traffic participants, e.g. other vehicles, when taking a corresponding decision. In a case SE:TOP in which the human driver has a full visibility of the surroundings of the first vehicle which also includes a section of the planned trajectory downstream of the stopped second vehicle, the human driver can decide whether it is most appropriate to overtake the second stopped vehicle, change the lane or wait. This decision becomes more difficult, if at least a part of the surroundings of the first vehicle are not visible for the driver. A portion of the surroundings may be occluded by the second vehicle. In such a case, an objectively correct decision is not possible from the perspective of the driver. Rather, the driver needs to decide based on experience.

Also in a case in which the first vehicle is traveling in a fully or partially autonomous mode, the problem of incomplete visibility of the surroundings may occur. In the context of a fully or partially autonomous vehicle this means that the sensors of the first vehicle which are configured to detect objects in the surroundings of the first vehicle, are not able to fully cover the surroundings. Especially, these sensors are not able to detect objects which are on the planned trajectory downstream of the stopped second vehicle.

It is an objective of the present disclosure to provide a solution to such situations. A means shall be provided for the first vehicle to react to a stopped second vehicle on its planned trajectory. As has been mentioned before, the first vehicle may be driven by a human driver or may travel in a fully or partially autonomous manner.

The problem is at least partially solved or alleviated by the subject matter of the independent claims of the present disclosure, wherein further embodiments are incorporated in the dependent claims.

According to a first aspect, there is provided a method for controlling a first vehicle. The first vehicle has a known identification feature, wherein the identification feature is an alphanumeric code of a license, is located at a known position in a known lane and is travelling along a planned trajectory. The method comprises:
- detecting a stopped second vehicle being located downstream of the first vehicle on the planned trajectory,
- detecting an identification feature of the second vehicle,
   wherein the identification feature is an alphanumeric code of a license;

- transmitting an assistance request to a central control entity, wherein the assistance request comprises at least the detected identification feature of the second vehicle, the known position of the first vehicle and the known identification feature of the first vehicle,
- receiving an information describing an amount of vehicles being positioned downstream of the stopped second vehicle along the planned trajectory, and
- triggering a lane change maneuver or an overtaking maneuver of the first vehicle if the received information describes an amount of vehicles being inferior to a predefined threshold amount, wherein the predefined threshold amount is indicative of a number of vehicles, or triggering a waiting maneuver if the received information describes an amount of vehicles equaling or exceeding the predefined threshold amount

In this context, triggering means to request the relevant systems of the first vehicle to start a lane change maneuver, an overtaking maneuver or a waiting maneuver respectively. The relevant systems include the traction motor of the first vehicle, the steering system of the first vehicle and the brake system of the first vehicle. In an example, the assistance request additionally comprises a status information describing that the first vehicle is in a blocked situation. Using this method, the lack of visibility of the surroundings which is caused by the fact that the first vehicle or a driver of the first vehicle is not able to see through the stopped second vehicle, is compensated by the information describing an amount of vehicles being positioned downstream of the stopped second vehicle which is received in response to an assistance request. It is noted that in the present context, the term lack of visibility is also used in order to indicate that sensors of the first vehicle are not able to detect objects in a certain part of the surroundings of the first vehicle. Using this method, the first vehicle can trigger the most appropriate reaction to the stopped second vehicle, i.e. a lane change maneuver, an overtaking maneuver or a waiting maneuver.

In the present context, the fact that the second vehicle is stopped may be detected by a camera being installed on the first vehicle. The images captured by this camera may be evaluated and related to a known speed of the first vehicle. Consequently, a velocity of the second vehicle and the distance between the first vehicle and the second vehicle may be estimated. The second vehicle may be considered to be stopped if its speed is zero or below a velocity threshold.

It is noted that the above method only needs to be performed if the second vehicle is located in front of the first vehicle on the planned trajectory.

In a preferred use case, the first vehicle is a fully or partially autonomous vehicle.

In an example, the method further comprises receiving a real-time traffic information describing a traffic flow along the planned trajectory at the known positon. The assistance request is only transmitted if the traffic flow exceeds a predefined traffic flow threshold. In other words, the assistance request is only transmitted if in view of the real-time traffic information, a stopped vehicle or a vehicle driving very slowly is not expected. In this context, a traffic flow may be expressed by an average velocity or by a number of vehicles per time unit. The traffic flow may additionally be normalized to a standard traffic flow or a maximum traffic flow along the relevant segment of the planned trajectory. The maximum traffic flow may for example relate to the speed limit of the relevant segment or a number of vehicle that can pass the segment in one time unit while maintaining an appropriate security distance. If the real-time traffic information indicates a traffic jam or very dense traffic, the method is abandoned. Otherwise, the method is continued.

Optionally, the real-time traffic information may form part of the assistance request.

In an example, the method further comprises waiting for a predefined time before transmitting the assistance request to the central control entity. Optionally, a waiting time can be transmitted to the central control entity as a part of the assistance request. Consequently, it is avoided that unnecessary assistance requests are sent to the central control unit. An unnecessary assistance request may for example be based on a second vehicle, having temporarily stopped for a very short time only.

In an example, the predefined time is dependent on the real-time traffic information. In an area, where the real-time traffic information indicates very fluent traffic, the waiting time may be shorter than in an area where traffic of only moderate fluency is expected. In areas, where the risk of traffic jams is high, the waiting time may also be high. The waiting time may for example be between 20 seconds and two minutes. Consequently, unnecessary assistance requests are further reduced.

In an example, the method further comprises detecting a traffic flow parameter of a neighboring lane being located adjacent to the lane of the first vehicle. The lane change maneuver or the overtaking maneuver is only triggered if the traffic flow parameter of the neighboring lane exceeds a predefined threshold. Obviously, a lane change or an overtaking maneuver is not possible, if the traffic on the lane to which the lane change is to be performed or which is needed for the overtaking maneuver is not flowing. The traffic flow parameter may be determined using a camera being installed in the first vehicle. If the traffic on the neighboring lane is not flowing or flowing very slowly, the waiting maneuver is performed.

In an example, the threshold amount may be dependent on the trajectory downstream of the first vehicle. This is especially relevant in situations where a crossing is expected in proximity to the stopped second vehicle and where the first vehicle needs to make a turn, i.e. the planned trajectory comprises cornering. In such a situation it has to be excluded that vehicles being located in front of the stopped second vehicle block the crossing such that the first vehicle is not able to travel around the corner of the planned trajectory. In such a situation the threshold amount may relate to a small number of vehicles only. In a situation in which the planned trajectory comprises a comparatively long and straight segment downstream of the second stopped vehicle and wherein two lanes are provided going into the same direction, the threshold amount may be higher.

According to a second aspect, there is provided a method for assisting a first vehicle in travelling along a planned trajectory using a central control entity, wherein a stopped second vehicle is located downstream of the first vehicle on the planned trajectory. The method comprises:
- receiving an assistance request from the first vehicle at the central control entity, wherein the assistance request comprises at least an identification feature of the second vehicle, wherein the identification feature is an alphanumeric code of a license plate, a known position of the first vehicle and a known identification feature of the first vehicle,
- determining a third vehicle being located within a predetermined distance from the first vehicle and travelling towards the known position of the first vehicle,
- transmitting a sensing request to the determined third vehicle by the central control entity, wherein the sensing request triggers the third vehicle to detect identification features of external vehicles being located in the surroundings of the third vehicle, wherein the external vehicles comprise at least the first vehicle and the second vehicle,
- receiving identification features of the external vehicles being detected by the third vehicle at the central control entity, wherein the identification feature is an alphanumeric code of a license plate, and deriving an information describing an amount of external vehicles being positioned downstream of the second vehicle along the planned trajectory based on the received identification features or
   receiving an information describing an amount of external vehicles being positioned downstream of the second vehicle along the planned trajectory from the third vehicle at the central control entity, and
- transmitting the information describing the amount of external vehicles being positioned downstream of the second vehicle along the planned trajectory to the first vehicle

In the present context, external vehicles are to be understood as vehicles being located in the surroundings of the third vehicle. Thus, the external vehicles are external to the third vehicle. Using the method according to the second aspect has the effect that an amount of vehicles being positioned downstream of the second vehicle along the planned trajectory may be determined. Those vehicles cannot be seen or detected directly by the first vehicle. However, the third vehicle is able to see and or detected these vehicles. Providing the information about the amount of vehicles downstream of the second vehicle along the planned trajectory helps the first vehicle to appropriately react to the stopped second vehicle. The predetermined distance is for example 50 m or 100 m. It is understood that the third vehicle needs to be located in proximity to the second stopped vehicle in order to be able to detect vehicles downstream of the second stopped vehicle.

The method according to the second aspect involves two alternatives. In a first alternative, a stream of identification features of external vehicles is received and the method according to the third aspect is used for determining an amount of external vehicles, i.e. for counting the number of different identification features in the stream. In a second alternative, the amount of external vehicles is directly received from the third vehicle.

The method according to the second aspect is running on a central control entity of a traffic control system. The central control entity may run a cloud service that is performing the method according to the second aspect.

According to a third aspect, which does not fall within the scope of the claims, there is provided a method for providing an information describing an amount of vehicles being positioned on a planned trajectory of a first vehicle at a position downstream of a stopped second vehicle. The method comprises:
- receiving a sensing request, wherein the sensing request triggers a detection of identification features of external vehicles, wherein the external vehicles comprise at least the first vehicle and the second vehicle,
- detecting identification features of external vehicles, and
- deriving an information describing an amount of external vehicles being positioned downstream of the second vehicle along the planned trajectory based on the detected identification features and transmitting the information describing an amount of external vehicles to a central control entity or transmitting the detected identification features to the central control entity.

Again, the identification feature may be an alphanumeric identification codes of a license plates. In a first alternative of the method according to the third aspect, it is part of the method to count the number of different identification features that are detected and transmits the information describing an amount of external vehicles to the central control entity. In an alternative, the method according to the third aspect does not count the amount of different identification features but just transmits the detected identification features to the central control entity. In the latter alternative, the central control entity performs the counting. Altogether, using the method according to the third aspect, a precise information concerning the amount of external vehicles being located downstream of the second stopped vehicle on the planned trajectory may be provided.

It is noted that a stop criteria of the method according to the third aspect may relate to a distance of the third vehicle from the second vehicle. This means that the third vehicle stops counting once it has exceeded a certain distance from the second vehicle. An alternative stop criteria may be the detection of a comparatively big gap between external vehicles. Such a gap may be detected in that for a predefined amount of time no identification feature is detected by the third vehicle. A further alternative of a stop feature may relate to a total amount of detected external vehicles.

The method according to the third aspect is preferably run on the third vehicle.

It is further noted that the third vehicle may travel in the same direction as the first vehicle or in an opposite direction. In both cases, the third vehicle is able to detect identification features of external vehicles.

According to a fourth aspect, there is provided a primary data processing apparatus comprising means for carrying out the method according to the first aspect of the present invention. Consequently, the primary data processing apparatus may be installed in the first vehicle. It helps the first vehicle to react appropriately to a second stopped vehicle which is located in front of the first vehicle along a planned trajectory.

According to a fifth aspect, there is provided a secondary data processing apparatus comprising means for carrying out the method according to the second aspect of the present invention. Consequently, the secondary data processing apparatus is installed in the central control entity. It helps to transmit the information concerning the amount of external vehicles being located downstream of the stopped second vehicle along a planned trajectory. This information helps the first vehicle to react appropriately to a second stopped vehicle which is located in front of the first vehicle along a planned trajectory.

According to a sixth aspect, which does not fall within the scope of the claims, there is provided a tertiary data processing apparatus comprising means for carrying out the method according to the third aspect of the present disclosure. Consequently, the tertiary data processing apparatus may be installed in the third vehicle. As has been explained before, the third vehicle, more precisely the tertiary data processing apparatus, is able to provide precise information about external vehicles being located downstream of the second vehicle along a planned trajectory. This helps the first vehicle to react appropriately to the stopped second vehicle.

According to a seventh aspect, there is provided a computer program comprising instructions which, when the program is executed by a computer, cause the computer to carry out at least one of the method according to the first aspect of the present disclosure and the method according to the third aspect of the present disclosure. Thus, the first vehicle can react appropriately to a second stopped vehicle which is located in front of the first vehicle along a planned trajectory.

According to an eighth aspect, there is provided a computer-readable storage medium comprising instructions which, when the program is executed by a computer, cause the computer to carry out at least one of the method according to the first aspect of the present invention and the method according to the third aspect of the present disclosure. Also the computer-readable storage medium has the effect that the first vehicle can react appropriately to a second stopped vehicle which is located in front of the first vehicle along a planned trajectory.

According to a ninth aspect, there is provided a computer program comprising instructions which, when the program is executed by a computer, cause the computer to carry out the method according to the second aspect of the present invention. Consequently, the information relating to the number of external vehicles being located downstream of the stopped second vehicle may be transferred to the first vehicle in a quick and reliable manner.

According to a tenth aspect, there is provided a vehicle comprising at least one of a primary data processing apparatus according to the present invention and a tertiary data processing apparatus according to the present disclosure. Three cases may be imagined. In a first case, the vehicle only comprises a primary data processing apparatus. Consequently, the vehicle is able to react appropriately to a second stopped vehicle being located downstream along a planned trajectory. In a second case, which does not fall within the scope of the claims, the vehicle only comprises a tertiary data processing apparatus. In this case, the vehicle is able to provide the relevant information about an amount of external vehicles. This is helpful for a first vehicle. In a third case, the vehicle comprises both a primary data processing apparatus and a tertiary data processing apparatus. Then the vehicle has both of the above described functionalities. Depending on the situation in which the vehicle is, it can act as a first vehicle or as a third vehicle.

According to an eleventh aspect, there is provided a traffic control system comprising a primary data processing apparatus according to the present invention a secondary data processing apparatus according to the present invention and a tertiary data processing apparatus according to the present disclosure. The primary data processing apparatus is communicatively connected to the secondary data processing apparatus and the tertiary data processing apparatus is communicatively connected to the secondary data processing apparatus. If such a traffic control system is used, second stopped vehicles do not create problems for first vehicles in a traffic system. Consequently, the traffic control system is able to control a traffic system in a smooth and efficient manner.

All methods of the present disclosure may be at least partly computer-implemented, and may be implemented in software or in hardware, or in software and hardware. Further, the methods of the present disclosure may be carried out by computer program instructions running on means that provide data processing functions. The data processing means may be suitable computing means, such as an electronic control module etc., which may also be a distributed computer system. The data processing means or the computer, respectively, may comprise one or more of a processor, a memory, a data interface, or the like.

These and other aspects of the present disclosure will become apparent from and elucidated with reference to the examples described hereinafter.

Examples of the disclosure will be described in the following with reference to the following drawings.

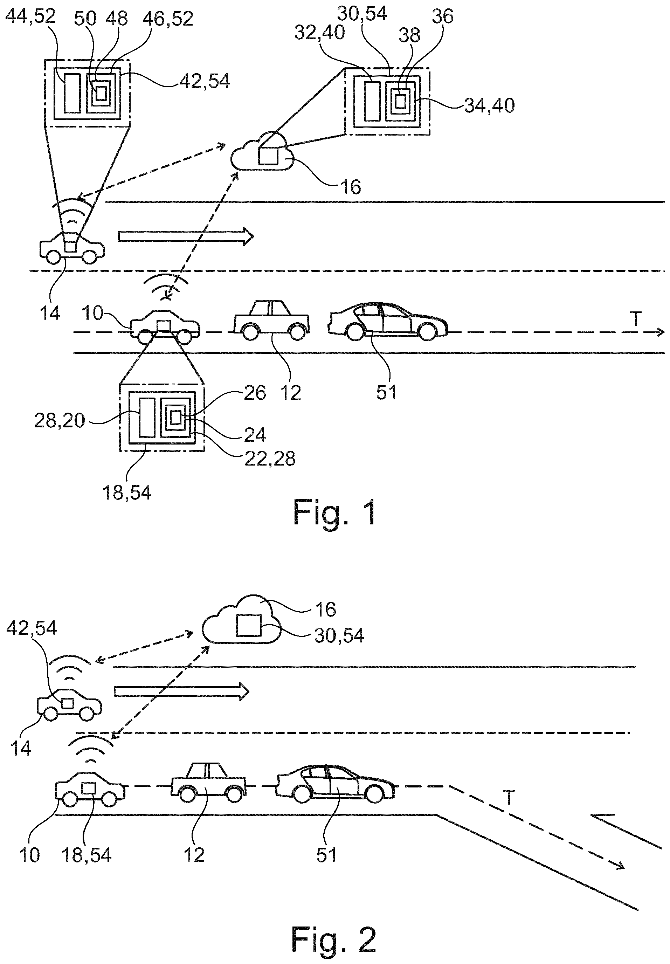

- Figure 1: shows a first traffic situation including a first vehicle which is a vehicle according to the present invention comprising at least a primary data processing apparatus according to the present invention running a computer program according to the present invention, a second vehicle and a third vehicle which is a vehicle according to the present disclosure comprising at least a tertiary data processing apparatus according to the present disclosure running a computer program according to the present disclosure, wherein the first traffic situation is controlled by a traffic control system according to the present invention and the methods according to the present invention
- Figure 2: shows a second traffic situation including a first vehicle which is a vehicle according to the present invention comprising at least a primary data processing apparatus according to the present disclosure running a computer program according to the present invention a second vehicle and a third vehicle which is a vehicle according to the present disclosure comprising at least a tertiary data processing apparatus according to the present disclosure running a computer program according to the present disclosure, wherein the second traffic situation is controlled by a traffic control system according to the present invention and the methods according to the present invention

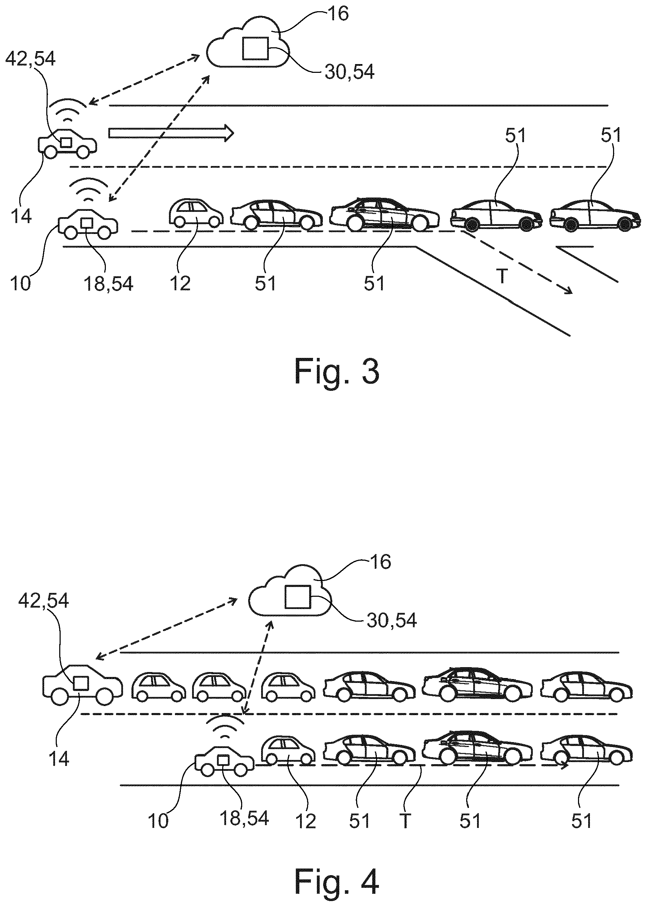

- Figure 3: shows a third traffic situation including a first vehicle which is a vehicle according to the present invention comprising at least a primary data processing apparatus according to the present invention running a computer program according to the present invention a second vehicle and a third vehicle which is a vehicle according to the present disclosure comprising at least a tertiary data processing apparatus according to the present disclosure running a computer program according to the present disclosure, wherein the third traffic situation is controlled by a traffic control system according to the present invention and the methods according to the present invention and
- Figure 4: shows a fourth traffic situation including a first vehicle which is a vehicle according to the present invention comprising at least a primary data processing apparatus according to the present invention running a computer program according to the present invention a second vehicle and a third vehicle which is a vehicle according to the present disclosure comprising at least a tertiary data processing apparatus according to the present disclosure running a computer program according to the present disclosure, wherein the fourth traffic situation is controlled by a traffic control system according to the present invention and the methods according to the present invention

The Figures are merely schematic representations and serve only to illustrate examples of the disclosure. Identical or equivalent elements are in principle provided with the same reference signs.

Figure 1 shows a first traffic situation.

This traffic situation includes a first vehicle 10 that has a known identification feature, is located at a known position in a known lane and is traveling along a planned trajectory T.

Moreover, the traffic situation includes a second vehicle 12 that is stopped on the planned trajectory T downstream of the first vehicle 10.

Additionally, the traffic situation includes a third vehicle 14 and a central control entity 16.

The first vehicle 10 comprises a primary data processing apparatus 18.

The primary data processing apparatus 18 comprises a primary data processing unit 20 and a primary data storage unit 22.

On the primary data storage unit 22, a primary computer-readable storage medium 24 is provided, wherein on the primary computer-readable storage medium 24 and thus on the primary data storage unit 22, a primary computer program 26 is provided.

The primary data processing apparatus 18 is configured to run a method for controlling the first vehicle. In this context, the primary data processing unit 20 and the primary data storage unit 22 form means 28 for carrying out the method for controlling the first vehicle.

The central control entity 16 comprises a secondary data processing apparatus 30.

The secondary data processing apparatus 30 comprises a secondary data processing unit 32 and a secondary data storage unit 34.

On the secondary data storage unit 34, a secondary computer-readable storage medium 36 is provided, wherein on the secondary computer-readable storage medium 36 and, thus, on the secondary data storage unit 34 a secondary computer program 38 is provided.

The secondary data processing apparatus 30 is configured to run a method for assisting the first vehicle 10 in travelling along the planned trajectory T. In this context, the secondary data processing unit 32 and the secondary data storage unit 34 form means 40 for carrying out the method for assisting a first vehicle 10 in travelling along a planned trajectory T.

The third vehicle 14 comprises a tertiary data processing apparatus 42.

The tertiary data processing apparatus 42 comprises a tertiary data processing unit 44 and a tertiary data storage unit 46.

On the tertiary data storage unit 46, a tertiary computer-readable storage medium 48 is provided, wherein on the tertiary computer-readable storage medium 48 and, thus, on the tertiary data storage unit 46, a tertiary computer program 50 is provided.

The tertiary data processing apparatus 42 is configured to run a method for providing an information describing an amount of vehicles 51 being positioned on the planned trajectory T. In this context, the tertiary data processing unit 44 and the tertiary data storage unit 46 form means 52 for carrying out the method for providing an information describing an amount of vehicles 51 being positioned on the planned trajectory T.

The primary data processing apparatus 18, the secondary data processing apparatus 30 and the tertiary data processing apparatus 42 form a traffic control system 54.

In this context, the primary data processing apparatus 18 is communicatively connected to the secondary data processing apparatus 30.

Also the tertiary data processing apparatus 42 is communicatively connected to the secondary data processing apparatus 30.

In the traffic situation of Figure 1, the first vehicle 10, more precisely the primary data processing apparatus 18, runs a method for controlling the first vehicle 10. In the following, the steps of the method for controlling the first vehicle 10 will be designated with reference signs S1x.

In a first step S11 of this method, the stopped second vehicle 12 is detected. Additionally, an identification feature of the second vehicle 12 is detected. This may be done by a camera unit being integrated into the first vehicle 10 and being connected to the primary data processing apparatus 18. In the present example, the identification feature is an alphanumeric code of a license plate.

As has been mentioned before, the second vehicle is located downstream of the first vehicle 10 on the planned trajectory T.

In a second step S12 of the method, the primary data processing apparatus 18 receives a real-time traffic information describing a traffic flow along the planned trajectory T from the central control entity 16.

In this context, a traffic flow threshold is provided on the primary data storage unit 22. The received real-time traffic information is compared to the traffic flow threshold.

In the present example, the real-time traffic information relates to a real-time average velocity at the location of the first vehicle 10. The traffic flow threshold thus also relates to a velocity. In the example, the real-time traffic information relates to a comparatively high average velocity. This means that the traffic is expected to be fluent.

Subsequently, in a step S13, the first vehicle 10 or more precisely the primary data processing apparatus 18 waits for a predefined time, e.g. 20 seconds.

It is assumed that after the predefined time, the stopped second vehicle 12 is still there. Consequently, an assistance request is transmitted from the primary data processing apparatus 18 to the central control entity 16 in a fourth step S14.

The assistance request comprises the detected identification feature of the second vehicle 12, the known position of the first vehicle 10 and the known identification feature of the first vehicle 10.

The central control entity 16, more precisely the secondary data processing apparatus 30, runs a method for assisting the first vehicle 10 in travelling along a planned trajectory T. As has been mentioned before, the stopped second vehicle 12 is located downstream of the first vehicle 10 on the planned trajectory T. In the following, the steps of the method for assisting the first vehicle 10 in travelling along a planned trajectory T will be designated with reference signs S2x.

In a first step S21 of the method running on the central control entity 16, the assistance request is received.

Subsequently, in a second step S22, the third vehicle 14 is determined. The third vehicle 14 is located within a predetermined distance from the first vehicle 10 and is traveling towards the known position of the first vehicle 10.

Thereafter, in a third step S23, a sensing request is transmitted to the third vehicle 14.

The sensing request triggers the third vehicle 14 to detect identification features of external vehicles 51 being located in the surroundings of the third vehicle 14. All the vehicles 51 from which the third vehicle 14 may detect an identification feature have to be external with respect to the third vehicle. Consequently, the vehicles 51 are as well called external vehicles 51. As before, the identification feature is an alphanumeric code of a license plate.

The external vehicles 51 comprise at least the first vehicle 10 and the second vehicle 12.

On the third vehicle 14, more precisely on the tertiary data processing apparatus 42, a method for providing an information describing an amount of vehicles 51 being positioned on the planned trajectory T of the first vehicle 10 at a position downstream of the stopped second vehicle 12 is run. In the following, the steps of the method for providing an information describing an amount of vehicles 51 will be designated with reference signs S3x.

In a first step S31 of this method, the sensing request is received.

Based on the sensing request, in a step S32, the third vehicle 14 which also comprises a camera unit, starts detecting identification features of external vehicles 51, i.e. vehicles 51 in the surroundings of the third vehicle 14.

The detected identification features are transmitted to the central control entity 16, more precisely to the secondary data processing apparatus 30 in a step S33.

The central control entity 16, thus, receives a stream of identification features of external vehicles 51 being detected by the third vehicle 14. This constitutes a step S24.

From this stream, the secondary data processing apparatus 30 is able to derive an information describing an amount of external vehicle 51 being positioned downstream of the second vehicle 12 along the planned trajectory T.

In the present example, the amount of external vehicles is one.

In a step S25, the information describing the amount of external vehicles 51 being positioned downstream of the second vehicle 12 along the planned trajectory T is transmitted to the first vehicle 10.

In a step S5, the first vehicle 10, more precisely the primary data processing apparatus 18 receives the information describing the amount of vehicles 51 being positioned downstream of the stopped vehicle 12.

Consequently, the first vehicle 10 is aware of the fact that there is only one other vehicle 51 in front of the stopped second vehicle 12.

Thereafter, in a step S16, a traffic flow parameter of a neighboring lane being located adjacent to the lane of the first vehicle 10 is detected. To this and the camera of the first vehicle 10 is used.

On the primary data storage unit 22, a corresponding threshold is stored.

Consequently the detected traffic flow parameter may be compared to the corresponding threshold. In doing so, the first vehicle 10 may detect whether on the neighboring lane the traffic is flowing or standing.

In the present example, the traffic is detected to be flowing.

Consequently, in a step S17 the first vehicle 10 will trigger a lane change maneuver or an overtaking maneuver in order to pass by the stopped second vehicle 12.

It is noted that the fact that one vehicle 51 is located in front of the second vehicle 12 on the trajectory T is a special case.

More generally speaking, the information describing the amount of vehicles 51 is compared to a predefined threshold amount. The threshold amounts may depend on the planned trajectory T.

This will be explained in connection with the traffic situations as shown in Figures 2 and 3. In the following, only the differences with respect to the above explanations which have been made in connection with the traffic situation of Figure 1 will be provided.

In a traffic situation of Figure 2, the planned trajectory T includes taking a turn at a position downstream of the stopped second vehicle 12. In the traffic situation of Figure 2 again, one vehicle 51 is located downstream of the second vehicle 12. Thus, as in the example of Figure 1, the first vehicle 10 will trigger an overtaking maneuver. After having performed the overtaking maneuver, the first vehicle 10 will still be in a position to take the turn in accordance with the planned trajectory T.

The traffic situation in Figure 3 is different. The planned trajectory T again includes the turn as in the example of Figure 2.

However now, it is determined that there are four vehicles downstream of the stopped second vehicle 12. These vehicles are blocking the intersection. Consequently, if the first vehicle 10 would perform an overtaking maneuver, it would not be possible to take the turn according to the planned trajectory T. Consequently, the first vehicle 10 will perform a waiting maneuver behind the stopped second vehicle 12.

Figure 4 shows a fourth traffic situation. Again, only the differences of this traffic situations over the traffic situations as explained before, will be discussed.

In the traffic situation of Figure 4, the determination of the traffic flow parameter of the neighboring lane is of particular importance.

In the traffic situation of Figure 4, the first vehicle 10 detects that the traffic on the neighboring lane is not flowing. Consequently, neither a lane change nor an overtaking maneuver is possible. Thus, the first vehicle will perform a waiting maneuver.

In the claims the word "comprising" does not exclude other elements or steps and the indefinite article "a" or "an" does not exclude a plurality. A single processor or other unit may fulfill the functions of several items or steps recited in the claims. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: first vehicle
- 12: second vehicle
- 14: third vehicle
- 16: central control entity
- 18: primary data processing apparatus
- 20: primary data processing unit
- 22: primary data storage unit
- 24: primary computer-readable storage medium
- 26: primary computer program
- 28: means for carrying out a method for controlling a first vehicle
- 30: secondary data processing apparatus
- 32: secondary data processing unit
- 34: secondary data storage unit
- 36: secondary computer-readable storage medium
- 38: secondary computer program
- 40: means for carrying out a method for assisting a first vehicle in travelling along a planned trajectory
- 42: tertiary data processing apparatus
- 44: tertiary data processing unit
- 46: tertiary data storage unit
- 48: tertiary computer-readable storage medium
- 50: tertiary computer program
- 51: vehicle, external vehicle
- 52: means for carrying out a method for providing an information describing an amount of vehicles being positioned on a planned trajectory
- 54: traffic control system
- T: planned trajectory

## Claims

1. A method for controlling a first vehicle (10), wherein the first vehicle (10) has a known identification feature, wherein the identification feature is an alphanumeric code of a license plate, is located at a known position in a known lane and is travelling along a planned trajectory (T), the method comprising:
- detecting a stopped second vehicle (12) being located downstream of the first vehicle (10) on the planned trajectory (T) (S11),
- detecting an identification feature of the second vehicle (12), wherein the identification feature is an alphanumeric code of a license plate (S11),
- transmitting an assistance request to a central control entity (16), wherein the assistance request comprises at least the detected identification feature of the second vehicle (12), the known position of the first vehicle (10) and the known identification feature of the first vehicle (10) (S14),
- receiving an information describing an amount of vehicles (51) being positioned downstream of the stopped second vehicle (12) along the planned trajectory (T) (S15), and
- triggering a lane change maneuver or an overtaking maneuver of the first vehicle (10) if the received information describes an amount of vehicles (51) being inferior to a predefined threshold amount, wherein the predefined threshold amount is indicative of a number of vehicles, or
triggering a waiting maneuver if the received information describes an amount of vehicles (51) equaling or exceeding the predefined threshold amount (S17).

2. The method of claim 1, further comprising receiving a real-time traffic information describing a traffic flow along the planned trajectory (T) at the known position before transmitting the assistance request, wherein the assistance request is only transmitted if the traffic flow exceeds a predefined traffic flow threshold associated with the planned trajectory (T) wherein the predefined traffic flow threshold is indicative of an average velocity or of a number of vehicles per time unit (S12).

3. The method of claim 1 or 2, further comprising waiting for a predefined time before transmitting the assistance request to the central control entity (16) (S13).

4. The method of claim 2 and 3, wherein the predefined time is dependent on the real-time traffic information.

5. The method of any one of the preceding claims, further comprising detecting a traffic flow parameter of a neighboring lane being located adjacent to the lane of the first vehicle (10), wherein the lane change maneuver or the overtaking maneuver is only triggered if the traffic flow parameter of the neighboring lane exceeds a predefined threshold associated with the neighboring lane (S16).

6. The method of any one of the preceding claims, wherein the predefined threshold amount is dependent on the planned trajectory (T) downstream of the first vehicle (10).

7. A method for assisting a first vehicle (10) in travelling along a planned trajectory (T) using a central control entity (16), wherein a stopped second vehicle (12) is located downstream of the first vehicle (10) on the planned trajectory (10), the method comprising:
- receiving an assistance request from the first vehicle (10) at the central control entity (16), wherein the assistance request comprises at least an identification feature of the second vehicle (12), wherein the identification feature is an alphanumeric code of a license plate, a known position of the first vehicle (10) and a known identification feature of the first vehicle (10) (S21),
- determining a third vehicle (14) being located within a predetermined distance from the first vehicle (10) and travelling towards the known position of the first vehicle (10) (S22),
- transmitting a sensing request to the determined third vehicle (14) by the central control entity (16), wherein the sensing request triggers the third vehicle (14) to detect identification features of external vehicles (51) being located in the surroundings of the third vehicle (14), wherein the external vehicles (51) comprise at least the first vehicle (10) and the second vehicle (12) (S23),
- receiving identification features of the external vehicles (51) being detected by the third vehicle (14) at the central control entity (16), wherein the identification feature is an alphanumeric code of a license plate, and deriving an information describing an amount of external vehicles (51) being positioned downstream of the second vehicle (12) along the planned trajectory (T) based on the received identification features or
receiving an information describing an amount of external vehicles (51) being positioned downstream of the second vehicle (12) along the planned trajectory (T) from the third vehicle (14) at the central control entity (16) (S24), and
- transmitting the information describing the amount of external vehicles (51) being positioned downstream of the second vehicle (12) along the planned trajectory (T) to the first vehicle (10) (S25).

8. A primary data processing apparatus (18) comprising means (28) for carrying out the method of any one of claims 1 to 6.

9. A secondary data processing apparatus (30) comprising means (40) for carrying out the method of claim 7.

10. Computer program (26, 50) comprising instructions which, when the program is executed by a computer, cause the computer to carry out the method of claims 1 to 6.

11. Computer program (38) comprising instructions which, when the program is executed by a computer, cause the computer to carry out the method of claim 7.

12. A vehicle (10, 14) comprising a primary data processing apparatus (18) according to claim 8.

13. Traffic control system (54) comprising a primary data processing apparatus (18) according to claim 8, a secondary data processing apparatus (30) according to claim 9 and a tertiary data processing apparatus (42), wherein the tertiary data processing apparatus comprises means (52) for carrying out a method for providing an information describing an amount of vehicles being positioned on a planned trajectory (T) of a first vehicle at a position downstream of a stopped second vehicle (12), wherein the method comprises
- receiving a sensing request (S31), wherein the sensing request triggers a detection of identification features of external vehicles (51), wherein the external vehicles (51) comprise at least the first vehicle (10) and the second vehicle (12),
- detecting identification features of external vehicles (51) (S32), and
- deriving an information describing an amount of external vehicles (51) being positioned downstream of the second vehicle (12) along the planned trajectory (T) based on the detected identification features and transmitting the information describing the amount of external vehicles (51) to a central control entity (16) or transmitting the detected identification features to the central control entity (16) (S33),
wherein the primary data processing apparatus (18) is communicatively connected to the secondary data processing apparatus (30) and the tertiary data processing apparatus (42) is communicatively connected to the secondary data processing apparatus (30).

## Patentansprüche

1. Verfahren zum Steuern eines ersten Fahrzeugs (10), wobei das erste Fahrzeug (10) ein bekanntes Identifikationsmerkmal aufweist, wobei das Identifikationsmerkmal ein alphanumerischer Code eines Nummernschildes ist, sich an einer bekannten Position in einer bekannten Fahrspur befindet und entlang einer geplanten Trajektorie (T) fährt, wobei das Verfahren umfasst:
- Detektieren eines gestoppten zweiten Fahrzeugs (12), das sich auf der geplanten Trajektorie (T) hinter dem ersten Fahrzeug (10) befindet (S11),
- Detektieren eines Identifikationsmerkmals des zweiten Fahrzeugs (12), wobei das Identifikationsmerkmal ein alphanumerischer Code eines Nummernschildes ist (S11),
- Senden einer Assistenzanforderung an eine zentrale Steuerungsentität (16), wobei die Assistenzanforderung mindestens das detektierte Identifikationsmerkmal des zweiten Fahrzeugs (12), die bekannte Position des ersten Fahrzeugs (10) und das bekannte Identifikationsmerkmal des ersten Fahrzeugs (10) umfasst (S14),
- Empfangen einer Information, die eine Anzahl von Fahrzeugen (51) beschreibt, die sich hinter dem gestoppten zweiten Fahrzeug (12) entlang der geplanten Trajektorie (T) befinden (S15), und
- Auslösen eines Spurwechselmanövers oder eines Überholmanövers des ersten Fahrzeugs (10), falls die empfangene Information eine Anzahl von Fahrzeugen (51) beschreibt, die kleiner ist als eine vordefinierte Schwellenanzahl, wobei die vordefinierte Schwellenanzahl eine Anzahl von Fahrzeugen angibt, oder
Auslösen eines Wartemanövers, falls die empfangene Information eine Anzahl von Fahrzeugen (51) beschreibt, die gleich der vordefinierten Schwellenanzahl oder höher als die vordefinierte Schwellenanzahl ist (S17).

2. Verfahren nach Anspruch 1, umfassend des Weiteren das Empfangen einer Echtzeit- Verkehrsinformation, die einen Verkehrsfluss entlang der geplanten Trajektorie (T) an der bekannten Position beschreibt, bevor die Assistenzanforderung gesendet wird, wobei die Assistenzanforderung nur gesendet wird, falls der Verkehrsfluss eine vordefinierte Verkehrsflussschwelle überschreitet, die mit der geplanten Trajektorie (T) verknüpft ist, wobei die vordefinierte Verkehrsflussschwelle eine Durchschnittsgeschwindigkeit oder eine Anzahl von Fahrzeugen pro Zeiteinheit angibt (S12) .

3. Verfahren nach Anspruch 1 oder 2, umfassend des Weiteren, eine vordefinierte Zeit zu warten, bevor die Assistenzanforderung an die zentrale Steuerungsentität (16) gesendet wird (S13).

4. Verfahren nach Anspruch 2 und 3, wobei die vordefinierte Zeit von der Echtzeit- Verkehrsinformation abhängig ist.

5. Verfahren nach einem der vorangehenden Ansprüche, umfassend des Weiteren das Detektieren eines Verkehrsflussparameters einer benachbarten Fahrspur, die sich neben der Fahrspur des ersten Fahrzeugs (10) befindet, wobei das Spurwechselmanöver oder das Überholmanöver nur ausgelöst wird, falls der Verkehrsflussparameter der benachbarten Fahrspur eine vordefinierte Schwelle überschreitet, der mit der benachbarten Fahrspur verknüpft ist (S16).

6. Verfahren nach einem der vorangehenden Ansprüche, wobei die vordefinierte Schwellenanzahl von der geplanten Trajektorie (T) hinter dem ersten Fahrzeug (10) abhängig ist.

7. Verfahren zum Assistieren eines ersten Fahrzeugs (10) beim Fahren entlang einer geplanten Trajektorie (T) unter Verwendung einer zentralen Steuerungsentität (16), wobei sich ein gestopptes zweites Fahrzeug (12) hinter dem ersten Fahrzeug (10) auf der geplanten Trajektorie (10) befindet, wobei das Verfahren umfasst:
- Empfangen einer Assistenzanforderung von dem ersten Fahrzeug (10) in der zentralen Steuerungsentität (16), wobei die Assistenzanforderung mindestens ein Identifikationsmerkmal des zweiten Fahrzeugs (12) umfasst, wobei das Identifikationsmerkmal ein alphanumerischer Code eines Nummernschildes, eine bekannte Position des ersten Fahrzeugs (10) und ein bekanntes Identifikationsmerkmal des ersten Fahrzeugs (10) ist (S21),
- Bestimmen eines dritten Fahrzeugs (14), das sich innerhalb einer zuvor festgelegten Distanz von dem ersten Fahrzeug (10) befindet und in Richtung der bekannten Position des ersten Fahrzeugs (10) fährt (S22),
- Senden einer Erfassungsanforderung an das bestimmte dritte Fahrzeug (14) durch die zentrale Steuerungsentität (16), wobei die Erfassungsanforderung das dritte Fahrzeug (14) veranlasst, Identifikationsmerkmale von externen Fahrzeugen (51) zu detektieren, die sich in der Umgebung des dritten Fahrzeugs (14) befinden, wobei die externen Fahrzeuge (51) mindestens das erste Fahrzeug (10) und das zweite Fahrzeug (12) umfassen (S23),
- Empfangen von Identifikationsmerkmalen der externen Fahrzeuge (51), die durch das dritte Fahrzeug (14) detektiert werden, in der zentralen Steuerungsentität (16), wobei das Identifikationsmerkmal ein alphanumerischer Code eines Nummernschildes ist, und Ableiten einer Information, die eine Anzahl von externen Fahrzeugen (51) beschreibt, die hinter dem zweiten Fahrzeug (12) entlang der geplanten Trajektorie (T) positioniert sind, anhand der empfangenen Identifikationsmerkmale, oder Empfangen einer Information, die eine Anzahl von externen Fahrzeugen (51) beschreibt, die sich hinter dem zweiten Fahrzeug (12) entlang der geplanten Trajektorie (T) von dem dritten Fahrzeug (14) in der zentralen Steuerungsentität (16) befinden (S24), und
- Senden der Information, die die Anzahl der externen Fahrzeuge (51) beschreibt, die sich hinter dem zweiten Fahrzeug (12) entlang der geplanten Trajektorie (T) befinden, an das erste Fahrzeug (10) (S25).

8. Primäre Datenverarbeitungsvorrichtung (18), umfassend ein Mittel (28) zum Ausführen des Verfahrens nach einem der Ansprüche 1 bis 6.

9. Sekundäre Datenverarbeitungsvorrichtung (30), umfassend ein Mittel (40) zum Ausführen des Verfahrens nach Anspruch 7.

10. Computerprogramm (26, 50), umfassend Instruktionen, die, wenn das Programm durch einen Computer ausgeführt wird, den Computer veranlassen, das Verfahren nach den Ansprüchen 1 bis 6 auszuführen.

11. Computerprogramm (38), umfassend Instruktionen, die, wenn das Programm durch einen Computer ausgeführt wird, den Computer veranlassen, das Verfahren nach Anspruch 7 auszuführen.

12. Fahrzeug (10, 14), umfassend eine primäre Datenverarbeitungsvorrichtung (18) nach Anspruch 8.

13. Verkehrssteuerungssystem (54), umfassend eine primäre Datenverarbeitungsvorrichtung (18) nach Anspruch 8, eine sekundäre Datenverarbeitungsvorrichtung (30) nach Anspruch 9 und eine tertiäre Datenverarbeitungsvorrichtung (42), wobei die tertiäre Datenverarbeitungsvorrichtung ein Mittel (52) zum Ausführen eines Verfahrens zum Bereitstellen einer Information umfasst, die eine Anzahl von Fahrzeugen beschreibt, die sich auf einer geplanten Trajektorie (T) eines ersten Fahrzeug an einer Position hinter einem gestoppten zweiten Fahrzeug (12) befinden, wobei das Verfahren umfasst:
- Empfangen einer Erfassungsanforderung (S31), wobei die Erfassungsanforderung eine Detektion von Identifikationsmerkmalen externer Fahrzeuge (51) auslöst, wobei die externen Fahrzeuge (51) mindestens das erste Fahrzeug (10) und das zweite Fahrzeug (12) umfassen,
- Detektieren von Identifikationsmerkmalen externer Fahrzeuge (51) (S32) und
- Ableiten einer Information, die eine Anzahl externer Fahrzeuge (51) beschreibt, die sich hinter dem zweiten Fahrzeug (12) entlang der geplanten Trajektorie (T) befinden, anhand der detektierten Identifikationsmerkmale, und Senden der Information, die die Anzahl externer Fahrzeuge (51) beschreibt, an eine zentrale Steuerungsentität (16), oder Senden der detektierten Identifikationsmerkmale an die zentrale Steuerungsentität (16) (S33),
wobei die primäre Datenverarbeitungsvorrichtung (18) kommunikativ mit der sekundären Datenverarbeitungsvorrichtung (30) verbunden ist und die tertiäre Datenverarbeitungsvorrichtung (42) kommunikativ mit der sekundären Datenverarbeitungsvorrichtung (30) verbunden ist.

## Revendications

1. Procédé pour commander un premier véhicule (10), dans lequel le premier véhicule (10) a une caractéristique d'identification connue, la caractéristique d'identification étant un code alphanumérique d'une plaque d'immatriculation, est situé à une position connue dans une voie connue et se déplace le long d'une trajectoire planifiée (T), le procédé comprenant de :
- détecter un deuxième véhicule arrêté (12) étant situé en aval du premier véhicule (10) sur la trajectoire planifiée (T) (S11),
- détecter une caractéristique d'identification du deuxième véhicule (12), dans lequel la caractéristique d'identification est un code alphanumérique d'une plaque d'immatriculation (S11),
- transmettre une demande d'assistance à une entité de commande centrale (16), dans lequel la demande d'assistance comprend au moins la caractéristique d'identification détectée du deuxième véhicule (12), la position connue du premier véhicule (10) et la caractéristique d'identification connue du premier véhicule (10) (S14),
- recevoir une information décrivant une quantité de véhicules (51) étant positionnés en aval du deuxième véhicule arrêté (12) le long de la trajectoire planifiée (T) (S15), et
- déclencher une manoeuvre de changement de voie ou une manoeuvre de dépassement du premier véhicule (10) si l'information reçue décrit une quantité de véhicules (51) étant inférieure à une quantité de seuil prédéfinie, dans lequel la quantité de seuil prédéfinie est indicative d'un nombre de véhicules, ou
déclencher une manoeuvre d'attente si l'information reçue décrit une quantité de véhicules (51) égale à la quantité de seuil prédéfinie (S17) ou dépassant celle-ci.

2. Procédé selon la revendication 1, comprenant en outre de recevoir une information de trafic en temps réel décrivant un écoulement de trafic le long de la trajectoire planifiée (T) à la position connue avant de transmettre la demande d'assistance, dans lequel la demande d'assistance est uniquement transmise si l'écoulement de trafic dépasse un seuil d'écoulement de trafic prédéfini associé à la trajectoire planifiée (T), dans lequel le seuil d'écoulement de trafic prédéfini est indicatif d'une vitesse moyenne ou d'un nombre de véhicules par unité de temps (S12).

3. Procédé selon la revendication 1 ou 2, comprenant en outre d'attendre pendant un temps prédéfini avant de transmettre la demande d'assistance à l'entité de commande centrale (16) (S13).

4. Procédé selon les revendications 2 et 3, dans lequel le temps prédéfini est dépendant de l'information de trafic en temps réel.

5. Procédé selon l'une quelconque des revendications précédentes, comprenant en outre de détecter un paramètre d'écoulement de trafic d'une voie voisine étant située au voisinage de la voie du premier véhicule (10), dans lequel la manoeuvre de changement de voie ou la manoeuvre de dépassement est uniquement déclenchée si le paramètre d'écoulement de trafic de la voie voisine dépasse un seuil prédéfini associé à la voie voisine (S16).

6. Procédé selon l'une quelconque des revendications précédentes, dans lequel la quantité de seuil prédéfinie est dépendante de la trajectoire planifiée (T) en aval du premier véhicule (10).

7. Procédé pour porter assistance à un premier véhicule (10) se déplaçant le long d'une trajectoire planifiée (T) en utilisant une entité de commande centrale (16), dans lequel un deuxième véhicule arrêté (12) est situé en aval du premier véhicule (10) sur la trajectoire planifiée (10), le procédé comprenant de :
- recevoir une demande d'assistance provenant du premier véhicule (10) au niveau de l'entité de commande centrale (16), dans lequel la demande d'assistance comprend au moins une caractéristique d'identification du deuxième véhicule (12), dans lequel la caractéristique d'identification est un code alphanumérique d'une plaque d'immatriculation, une position connue du premier véhicule (10) et une caractéristique d'identification connue du premier véhicule (10) (S21),
- déterminer un troisième véhicule (14) étant situé à une distance prédéterminée du premier véhicule (10) et se déplaçant vers la position connue du premier véhicule (10) (S22),
- transmettre une demande de détection au troisième véhicule (14) déterminé par l'entité de commande centrale (16), dans lequel la demande de détection déclenche le troisième véhicule (14) afin de détecter des caractéristiques d'identification de véhicules externes (51) étant situés aux alentours du troisième véhicule (14), dans lequel les véhicules externes (51) comprennent au moins le premier véhicule (10) et le deuxième véhicule (12) (S23),
- recevoir des caractéristiques d'identification des véhicules externes (51) étant détectées par le troisième véhicule (14) au niveau de l'entité de commande centrale (16), dans lequel la caractéristique d'identification est un code alphanumérique d'une plaque d'immatriculation, et obtenir une information décrivant une quantité de véhicules externes (51) étant positionnés en aval du deuxième véhicule (12) le long de la trajectoire planifiée (T) sur la base des caractéristiques d'identification reçues ou recevoir une information décrivant une quantité de véhicules externes (51) étant positionnés en aval du deuxième véhicule (12) le long de la trajectoire planifiée (T), provenant du troisième véhicule (14) au niveau de l'entité de commande centrale (16) (S24), et
- transmettre l'information décrivant la quantité de véhicules externes (51) étant positionnés en aval du deuxième véhicule (12) le long de la trajectoire planifiée (T), au premier véhicule (10) (S25).

8. Appareil de traitement de données primaire (18) comprenant des moyens (28) pour mettre en œuvre le procédé de l'une quelconque des revendications 1 à 6.

9. Appareil de traitement de données secondaire (30) comprenant des moyens (40) pour mettre en œuvre le procédé de la revendication 7.

10. Programme informatique (26, 50) comprenant des instructions qui, lorsque le programme est exécuté par un ordinateur, amènent l'ordinateur à mettre en œuvre le procédé des revendications 1 à 6.

11. Programme informatique (38) comprenant des instructions qui, lorsque le programme est exécuté par un ordinateur, amènent l'ordinateur à mettre en œuvre le procédé de la revendication 7.

12. Véhicule (10, 14) comprenant un appareil de traitement de données primaire (18) selon la revendication 8.

13. Système de régulation de trafic (54) comprenant un appareil de traitement de données primaire (18) selon la revendication 8, un appareil de traitement de données secondaire (30) selon la revendication 9 et un appareil de traitement de données tertiaire (42), dans lequel l'appareil de traitement de données tertiaire comprend des moyens (52) pour mettre en œuvre un procédé destiné à fournir une information décrivant une quantité de véhicules étant positionnés sur une trajectoire planifiée (T) d'un premier véhicule à une position en aval d'un deuxième véhicule arrêté (12), dans lequel le procédé comprend de :
- recevoir une demande de détection (S31), dans lequel la demande de détection déclenche une détection de caractéristiques d'identification de véhicules externes (51), dans lequel les véhicules externes (51) comprennent au moins le premier véhicule (10) et le deuxième véhicule (12),
- détecter des caractéristiques d'identification de véhicules externes (51) (S32), et
- obtenir une information décrivant une quantité de véhicules externes (51) étant positionnés en aval du deuxième véhicule (12) le long de la trajectoire planifiée (T) sur la base des caractéristiques d'identification détectées et transmettre l'information décrivant la quantité de véhicules externes (51) à une entité de commande centrale (16) ou transmettre les caractéristiques d'identification détectées à l'entité de commande centrale (16) (S33), dans lequel l'appareil de traitement de données primaire (18) est relié de manière communicante à l'appareil de traitement de données secondaire (30) et l'appareil de traitement de données tertiaire (42) est relié de manière communicante à l'appareil de traitement de données secondaire (30).
